# FASCICULE DE BREVET EUROPEEN

(11) **EP 2 511 188 B1**
(45) Date de publication et mention de la délivrance du brevet: **29.01.2014**
(21) Numéro de dépôt: 12164016.3
(22) Date de dépôt: 13.04.2012
(51) Int. Cl.: B65D 33/02, B65D 75/28, B31B 19/64, B31B 23/00, B65B 9/13, B65B 25/16, B65D 33/22

(54) **Machine et procédé d'ensachage de produits alimentaires allongés et sac d'ensachage correpondant**
Maschine und Verfahren zum Verpacken von länglichen Lebensmittelprodukten in Beutel, und entsprechender Verpackungsbeutel
Machine and method for bagging elongate food products and corresponding pouch

(30) Priorité: 14.04.2011 FR 1153268
(43) Date de publication de la demande: 17.10.2012
(73) Titulaire: Dune, 69800 Saint-Priest (FR)
(72) Inventeur: Duffner, Hervé, 69300 CALUIRE (FR)
(74) Mandataire: Myon, Gérard Jean-Pierre

(56) Documents cités:
- EP-A1- 1 028 054
- WO-A1-01/05671
- FR-A1- 2 385 588
- US-A- 4 059 478

## Description

L'invention a trait à une machine pour ensacher des produits alimentaires allongés tels que des pains. L'invention a également trait à un sac d'ensachage d'un produit alimentaire allongé.

Dans le domaine de la boulangerie industrielle, il est connu d'ensacher des pains avant leur mise à disposition du public, notamment dans le rayon boulangerie d'une grande surface.

FR-A-2 678 897 décrit un dispositif pour l'ensachage des pains dans lesquels une gaine continue en matière plastique enroulée en bobine est déplacée, selon un trajet prédéterminé, jusque dans une position dans laquelle il est possible d'insérer un pain à l'intérieur de cette gaine, la gaine étant découpée et soudée par un mécanisme adéquat, de façon à former des sachets individuels de présentation des pains.

Il est également connu de EP-A-1 028 054 de monter deux mécanismes d'entraînement sur un même bâti, chacun de ces mécanismes étant apte à entraîner une gaine selon un trajet en regard duquel peut être amenée une unité de découpe/soudage. Ce matériel peut fonctionner avec une gaine constituée par l'assemblage d'une feuille de papier et d'une feuille de matière plastique.

US-A-4 059 478 prévoit de réaliser des compartiments à partir de films de polyester au sein d'une machine comprenant successivement, le long du trajet de progression d'une gaine, une station de soudage longitudinal des films, une station d'apport de couches de polyester supplémentaires, une station de soudage et, enfin, une station de soudage. Dans cette machine connue, le fond des compartiments est réalisé par une ligne de soudage entre deux feuilles de polyester. Un tel fond n'est pas très résistant et peut céder sous le poids du pain contenu dans le sachet, notamment lorsque le pain est lâché d'une hauteur relativement élevée par rapport à la gaine en place dans la machine.

Il est par ailleurs connu de réaliser un sachet pour un pain dont le fond est obtenu en rabattant une feuille de papier sur l'avant du sachet et en collant cette feuille en place. Un tel sachet doit être fabriqué sur un site de production propre, différent de la boulangerie. Pour être utilisés lors de l'ensachage de pains, les sachets doivent donc être stockés près d'un poste de conditionnement, ouverts par un opérateur et remplis manuellement, ce qui est long et fastidieux.

Un sac constitué de deux feuilles réalisées dans un même matériau est connu de WO-A-01/05671. Le fond de ce sac n'est pas résistant car les bandes situées à l'intérieur du pli constitué en partie basse ne sont pas rabattues l'une contre l'autre ni soudées entre elles.

Des problèmes analogues se posent lors du conditionnement d'autres produits alimentaires allongés, tels que par exemple des saucissons ou des articles de viennoiserie.

C'est à ces inconvénients qu'entend plus particulièrement remédier l'invention en proposant une nouvelle machine d'ensachage qui permet un ensachage semi-automatique de produits alimentaires allongés, tels que des pains, et avec laquelle les sachets qui entourent les pains ont peu de chance de se déchirer au niveau de leur fond.

A cet effet, l'invention concerne une machine d'ensachage de produits alimentaires allongés, notamment de pains, cette machine comprenant un bâti, une bobine montée rotative sur ce bâti et comprenant une gaine tubulaire enroulée, cette gaine comprenant elle-même une première feuille en matériau thermosoudable et une deuxième feuille en papier. Cette machine comprend également un mécanisme d'entraînement de la gaine, à partir de la bobine montée sur le bâti, des moyens de découpe de la gaine et des moyens de soudage de la gaine. Conformément à l'invention, cette machine comprend des moyens de pliage de la gaine, après sa découpe par les moyens de découpe et avant son soudage par les moyens de soudage, dans une configuration où la première feuille forme une première et une deuxième bandes, jointives et rabattues l'une contre l'autre, alors que la deuxième feuille forme une troisième et une quatrième bandes, jointives et respectivement plaquées contre la première bande et contre la deuxième bande, et que les moyens de soudage sont prévus pour et aptes à souder les première et deuxième bandes ensemble et au moins avec la troisième bande. En outre, les moyens de pliage comprennent un organe de pliage mobile, selon une direction perpendiculaire et une direction d'avance de la gaine, entre une première position où l'organe de pliage est à distance de la gaine et une deuxième position où l'organe de pliage pousse la gaine, à partir du côté de la première feuille et en direction du côté de la deuxième feuille, en pliant les première et deuxième feuilles au niveau des zones de jonction respectives entre les première et deuxième bandes, d'une part, et entre les troisième et quatrième bandes, d'autre part.

Grâce à l'invention, les trois bandes qui appartiennent respectivement à la première feuille en matériau thermosoudable et à la deuxième feuille en papier forment ensemble un pli soudé qui constitue le fond d'un sachet formé par la gaine pour recevoir un produit alimentaire allongé. Ce fond est plus solide que les soudures simples obtenues avec les machines de l'état de la technique.

Selon des aspects avantageux mais non obligatoires de l'invention, une telle machine peut incorporer une ou plusieurs des caractéristiques suivantes prises dans toute combinaison techniquement admissible :
- La machine comprend des moyens de serrage de la gaine avant découpe. Ces moyens de serrage peuvent comprendre un organe d'appui élastique contre la première feuille de la gaine, cet organe étant monté sur une traverse mobile par rapport à la gaine, avec interposition d'un ressort de rappel de l'organe d'appui en direction de la gaine, alors que la traverse porte une lame formant un organe de pliage de la gaine.
- Une fente de passage de la lame est ménagée dans l'organe d'appui alors que la lame peut être plus ou moins engagée dans la fente en fonction de la position relative de la traverse et de l'organe d'appui.
- Les moyens de découpe comprennent une lame de coupe montée sur une traverse appartenant aux moyens de serrage, cette lame étant coulissante par rapport à cette traverse, selon une direction perpendiculaire à une direction d'avance de la gaine, entre une première position où la lame est rétractée à l'intérieur de la traverse et une deuxième position où la lame dépasse de la traverse, en direction d'une partie des moyens de serrage opposés à cette traverse.
- L'organe d'appui est pourvu d'une fente de réception d'un bord tranchant de la lame de coupe.
- Les moyens de soudage comprennent une lame de chauffe et une contre-lame montée sur un levier basculant autour d'un axe perpendiculaire à une direction d'avance de la gaine, entre une première position où la contre-lame est à distance de la gaine et une deuxième position où la contre-lame plaque les première, deuxième, troisième et quatrième bandes contre la lame de chauffe.
- Les moyens de découpe, les moyens de soudage, les moyens de pliage et, éventuellement, les moyens de serrage sont commandés par des cames entraînées par un arbre commun.
- Les cames sont entraînées par un moteur commandé en fonction d'un signal délivré par un dispositif de détection de l'engagement d'un pain dans une extrémité supérieure de la gaine.
- La machine comprend un premier galet, monté sur une traverse appartenant aux moyens de serrage et coopérant avec une première came, un deuxième galet, monté sur un organe solidaire en translation avec la lame de coupe et coopérant avec une deuxième came, et un troisième galet, monté sur le levier basculant et coopérant avec une troisième came.

L'invention concerne également un sac d'ensachage d'un produit alimentaire allongé, ce sac étant formé dans une machine d'ensachage à partir d'une gaine tubulaire comprenant une première feuille en matériau thermosoudable et une deuxième feuille en papier assemblées ensemble. Ce sac est caractérisé en ce que son fond comprend une zone multicouche formée, d'une part, par une première et une deuxième bandes jointives de la première feuille qui sont rabattues et soudées l'une contre l'autre et, d'autre part, par une troisième et une quatrième bande jointives de la deuxième feuille qui sont respectivement plaquées et soudées contre la première et la deuxième bandes.

Avantageusement, les première et deuxième bandes sont reliées entre elles par un premier pli à 180° et les troisième et quatrième bandes sont reliées entre elles par un deuxième pli à 180°. La zone multicouche comprend exclusivement les première, deuxième, troisième et quatrième bandes plaquées les unes contre les autres, avec le premier pli disposé à l'intérieur du deuxième pli, ces deux plis formant ensemble l'extrémité inférieure du sac lorsque l'ouverture de ce sac est dirigée vers le haut.

Enfin l'invention concerne un procédé d'ensachage d'un produit alimentaire allongé au moyen d'une machine comprenant un bâti, une bobine montée rotative sur ce bâti et comprenant une gaine tubulaire enroulée, cette gaine comprenant une première feuille en matériau thermosoudable et une deuxième feuille en papier, un mécanisme d'entraînement de la gaine à partir de la bobine, des moyens de découpe de la gaine et des moyens de soudage de la gaine. Ce procédé comprend des étapes successives consistant à :
a) dévider la gaine de la bobine
b) engager le produit alimentaire dans l'extrémité de la gaine
c) immobiliser une partie dévidée de la gaine par rapport au bâti, à l'aide de moyens de serrage
d) couper la gaine à l'aide des moyens de découpe
e) souder ensemble deux parties de la gaine et
h) libérer un sac formé lors des étapes d) et e) et contenant le produit alimentaire allongé en relâchant les moyens de serrage.

Conformément à l'invention, ce procédé comprend des étapes postérieures à l'étape d) et antérieures à l'étape h) et consistant successivement à
f) plier la gaine à l'aide de moyens de pliage comprenant un organe de pliage mobile, en rabattant l'une contre l'autre les première et deuxième bandes de la première feuille de la gaine et en plaquant les troisième et quatrième bandes de la deuxième feuille respectivement contre les première et deuxième bandes
g) souder les première et deuxième bandes ensemble et au moins avec la troisième bande.

De façon avantageuse, lors de l'étape g), on soude ensemble la première bande avec la troisième bande et la deuxième bande avec la quatrième bande.

L'invention sera mieux comprise et d'autres avantages de celle-ci apparaîtront plus clairement à la lumière de la description qui va suivre d'un mode de réalisation d'une machine et d'un procédé d'ensachage conformes à son principe et d'un sac d'ensachage utilisé avec cette machine également conforme à l'invention, donnée uniquement à titre d'exemple et faite en référence aux dessins annexés dans lesquels :
- la figure 1 est une représentation schématique de principe, en vue de côté, d'une machine d'ensachage conforme à l'invention avant utilisation,
- la figure 2 est une vue en perspective de la machine de la figure 1, selon un premier angle,
- la figure 3 est une vue en perspective de la machine des figures 1 et 2 selon un autre angle,
- la figure 4 est une vue de côté comparable à la figure 1 mais à plus petite échelle, lors d'une première étape d'utilisation de la machine,
- la figure 5 est une vue analogue à la figure 4, lors d'une deuxième étape d'utilisation de la machine,
- la figure 6 est une vue à plus grande échelle du détail VI à la figure 5, lors d'une troisième étape d'utilisation de la machine,
- la figure 7 est une vue à plus grande échelle du détail VII à la figure 6,
- la figure 8 est une vue analogue à la figure 7, mais en coupe au niveau d'un plan médian de la machine, lors d'une quatrième étape d'utilisation de la machine,
- la figure 9 est une vue analogue à la figure 8, lors d'une cinquième étape d'utilisation de la machine,
- la figure 10 est une vue analogue à la figure 8, lors qu'une sixième étape d'utilisation de la machine,
- la figure 11 est une vue à plus grande échelle du détail XI à la figure 10,
- la figure 12 est une vue analogue à la figure 8 lors d'une septième étape d'utilisation de la machine, et
- la figure 13 est une coupe longitudinale de principe d'un sachet fabriqué et utilisé pour emballer un pain dans la machine des figures 1 à 12.

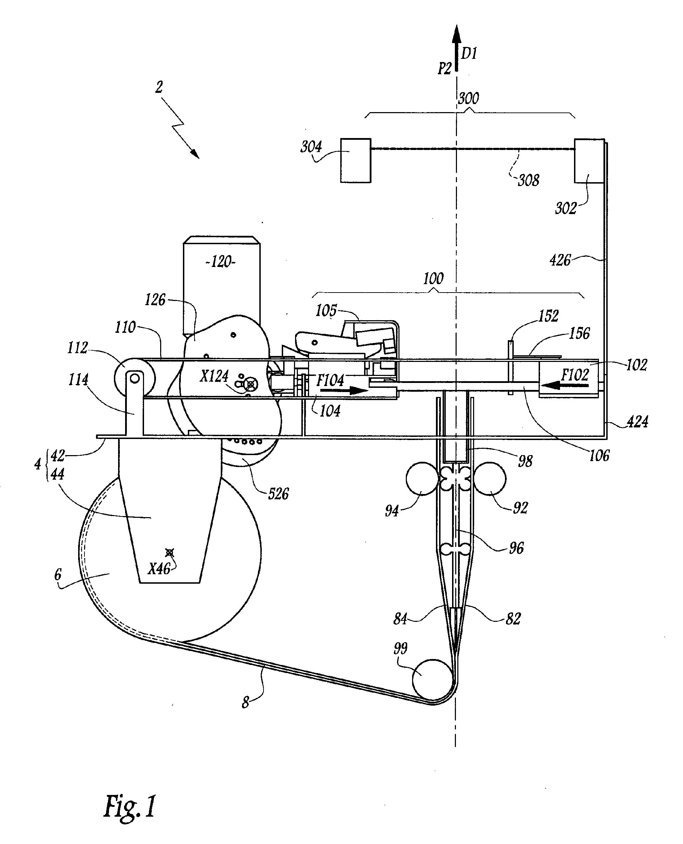

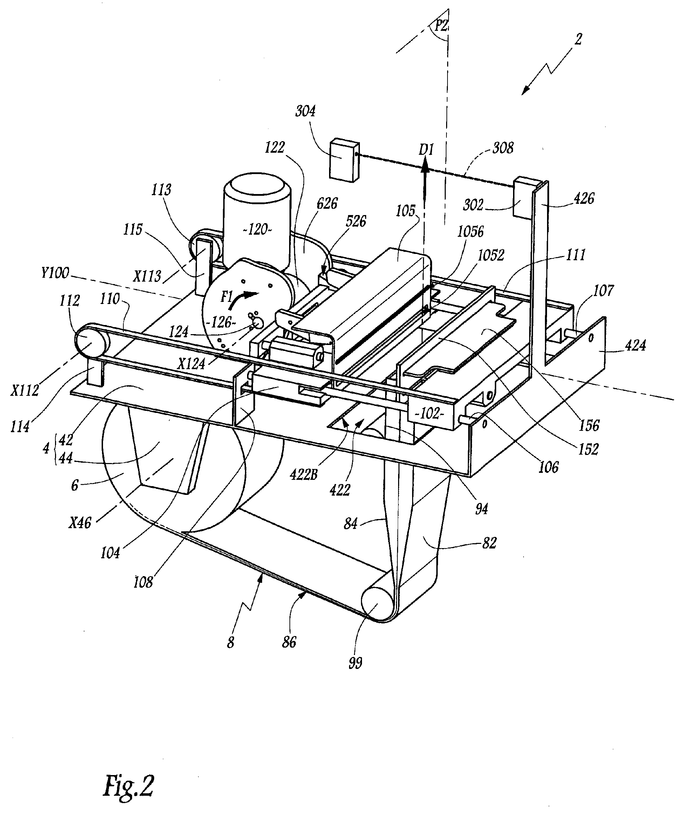

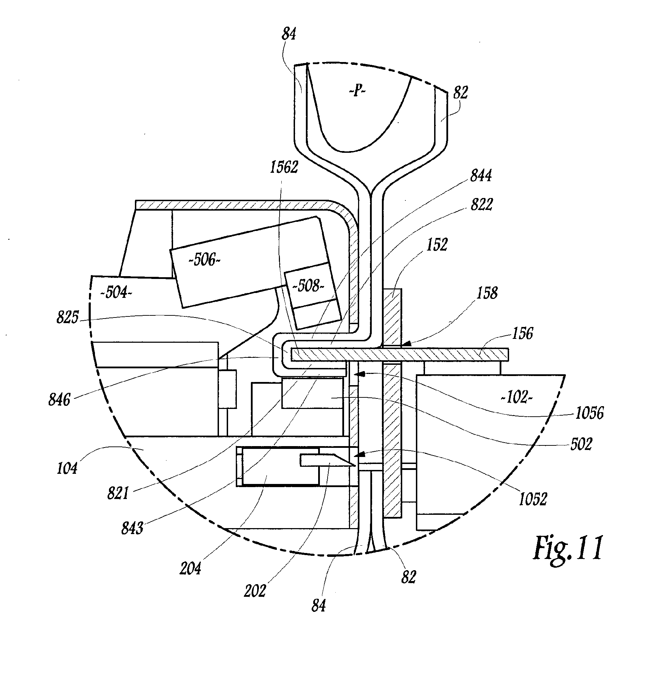

La machine 2 représentée sur les figures 1 à 12 est prévue pour être installée, par exemple, dans le rayon boulangerie d'une grande surface. Elle comprend un bâti 4 partiellement représenté sur ces figures, ainsi qu'une carrosserie qui n'est pas représentée pour la clarté du dessin. Le bâti 4 comprend une plaque plane 42 disposée horizontalement en configuration d'utilisation de la machine 2 et à partir de laquelle s'étend une joue 44 qui supporte un arbre 46 de réception d'une bobine 6, avec possibilité de rotation de la bobine 6 autour de l'axe géométrique horizontal X46 de l'arbre 46.

La bobine 6 est formée par l'enroulement sur elle-même d'une gaine 8 constituée par le soudage ou le collage d'une première feuille 82 en matériau synthétique et d'une deuxième feuille 84 en papier. Les deux feuilles 82 et 84 sont soudées continument au niveau de deux bords longitudinaux 86 et 88 de la gaine 8. La feuille 82 est en polypropylène transparent et percée d'orifices régulièrement repartis sur sa surface pour permettre l'aération du volume intérieur d'un sachet constitué à partir d'une partie de la gaine 8. En variante, la première feuille 82 de la gaine 8 peut être constituée dans une autre matière synthétique, par exemple du polyéthylène, ou dans une matière biodégradable, à base d'amidon de maïs, fusible thermiquement. Le matériau constitutif de la feuille 82 est thermosoudable en ce sens qu'il peut être soudé à un autre matériau ou à lui-même par échauffement.

Deux rouleaux d'entraînement 92 et 94 sont disposés de part et d'autre d'un écarteur 96 agencé sur le trajet de la gaine 8, entre la bobine 6 et une ouverture 422 ménagée dans la plaque 42 pour le passage de cette gaine. L'écarteur 96 est parfois dénommé « chariot » et il supporte un organe 98 en partie déformable. L'écarteur 96 est maintenu en position grâce aux deux rouleaux d'entraînement 92 et 94 qui le compriment, sous l'action de ressorts non représentés.

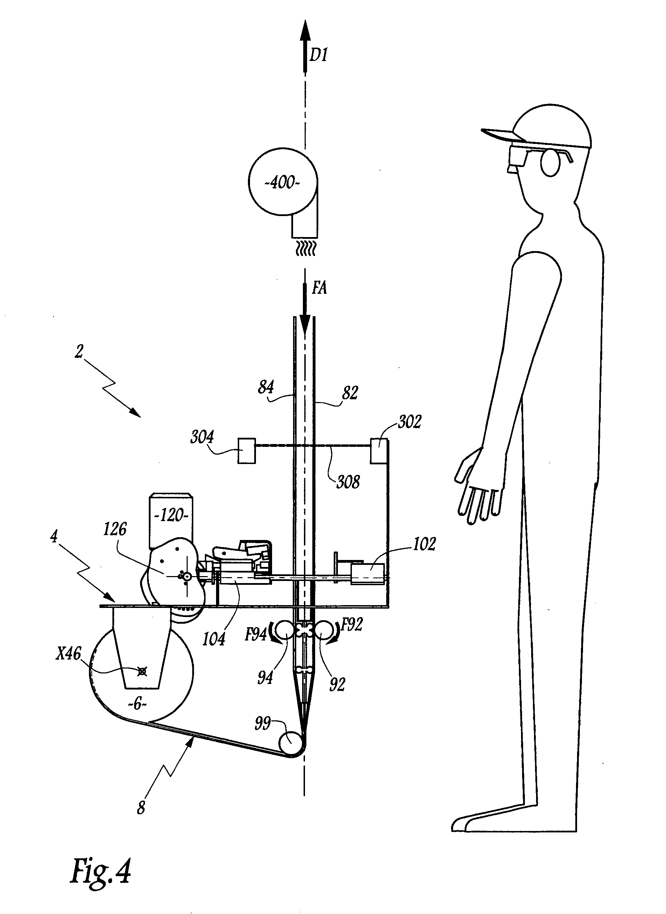

Les rouleaux d'entraînement 92 et 94 sont entraînés par des moyens non représentés dans le sens des flèches F92 et F94 à la figure 4, tout en étant en appui contre l'écarteur 96, respectivement à travers les feuilles 82 et 84.

Un galet de renvoi 99 est disposé au voisinage de l'écarteur 96, sensiblement au-dessus de celui-ci et sur un côté. Ainsi, le mouvement de rotation des galets 92 et 94 représentés par les flèches F92 et F94 a pour effet de dévider la gaine 8 par rapport à la bobine 6 et de faire progresser une partie de celle-ci, qui s'étend au-dessus du galet de renvoi 99, selon une direction de progression D1 qui est verticale et dirigée vers le haut.

Aux figures 1, 4 à 10 et 12, la gaine 8 est représentée en coupe au niveau de l'écarteur 96 pour permettre la visualisation de cet écarteur et de l'organe 98. En pratique, les bords soudés 86 et 88 de la gaine masquent les éléments 96 et 98 en vue de côté de la machine 2.

Un dispositif de serrage 100 est prévu au-dessus de la plaque 42 pour plaquer sélectivement l'une contre l'autre les feuilles 82 et 84, dans leurs parties qui ont dépassé l'écarteur 96 et l'organe 98 en progressant dans le sens de la direction D1. Le dispositif 100 comprend une première traverse 102 et une deuxième traverse 104, toutes deux montées coulissantes sur une paire de rails 106 et 107 qui s'étendent parallèlement à la plaque 42, au-dessus de celle-ci, entre un bord rabattu 424 de la plaque 42 et des pattes 108 et 109 fixées sur la plaque 42. Les rails 106 et 107 constituent donc des moyens de guidage en translation des traverses ou mors 102 et 104 parallèlement à un axe Y100 qui est perpendiculaire à l'axe X46 et à la direction D1.

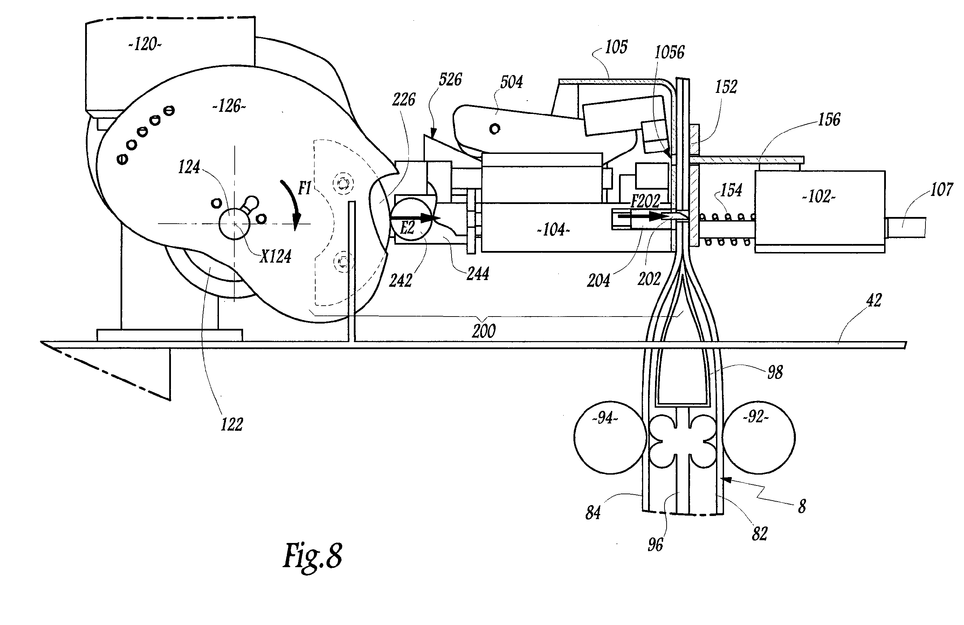

Les figures 8 à 12 sont des coupes parallèles à l'axe Y100, au niveau d'un plan médian entre les rails 106 et 107. Pour la clarté du dessin, sur ces coupes, seules certaines pièces coupées sont hachurées, à savoir le plateau presseur, la lame de pliage et la plaque de protection mentionnées ci-après.

Deux courroies 110 et 111 relient les traverses 102 et 104, en faisant chacune le tour d'une poulie folle 112 ou 113 supportée par une patte 114 ou 115 qui s'étend verticalement au-dessus de la plaque 42. Les axes de rotation respectifs X112 et X113 des poulies 112 et 113 sont parallèles à l'axe X46 et alignés entre eux.

Pour la clarté du dessin, les éléments 110 à 115 sont représentés uniquement sur les figures 1 à 3.

On note P2 un plan perpendiculaire à l'axe Y100 et médian entre les bords longitudinaux 422A et 422B de l'ouverture 422. Ce plan contient la direction D1 et il est parallèle à l'axe X46.

Les courroies 110 et 111 ont pour effet qu'un mouvement de rapprochement de la traverse 104 en direction du plan P2, dans le sens de la flèche F104 sur les figures est transmis par les courroies 110 et 111 à la traverse 102 qui se rapproche alors également du plan P2, avec un mouvement dans le sens de la flèche F102. Les courroies 110 et 111 assurent donc le synchronisme des mouvements de rapprochement des traverses 102 et 104 en direction du plan P2.

Le rapprochement des traverses 102 et 104 est obtenu grâce à un moteur électrique 120 qui attaque un renvoi d'angle 122 à 90°, formant réducteur et dont l'arbre de sortie 124 est aligné sur un axe X124 parallèle à l'axe X46. Une came 126 est montée fixe en rotation sur l'arbre 124 et cette came interagit avec un galet 142 monté libre en rotation sur un bras 144 solidaire de la traverse 104. Ainsi, la rotation de la came 126 autour de l'axe X124, dans le sens de la flèche F1 aux figures, a pour effet de déplacer le galet 142, et par la même la traverse 104, en direction du plan P2. Ce mouvement est transmis à la traverse 102 par les courroies 110 et 111, ce qui induit le déplacement de la traverse 102 en direction du plan P2, selon la flèche F102.

La forme de la surface de la came 126 qui interagit avec le galet 142 permet un rapprochement progressif des traverses 102 et 104. Des moyens non représentés, tels que des ressorts hélicoïdaux, peuvent être prévus pour écarter l'une de l'autre les traverses 102 et 104 lorsque la came 126 est dans une position où elle ne pousse pas complètement ces traverses l'une vers l'autre.

La traverse 102 est équipée d'un plateau presseur 152 destiné à venir en appui contre la première feuille 82 de la gaine 8, au-dessus de la plaque 42. Un ressort hélicoïdal 154 est intercalé entre les traverses 102 et le plateau presseur 152. Ainsi, en fonction de l'intensité de l'effort exercé par la came 126 sur le galet 142 et qui tend à rapprocher les traverses 102 et 104, le plateau presseur 152 peut être plus ou moins rapproché de la traverse 102.

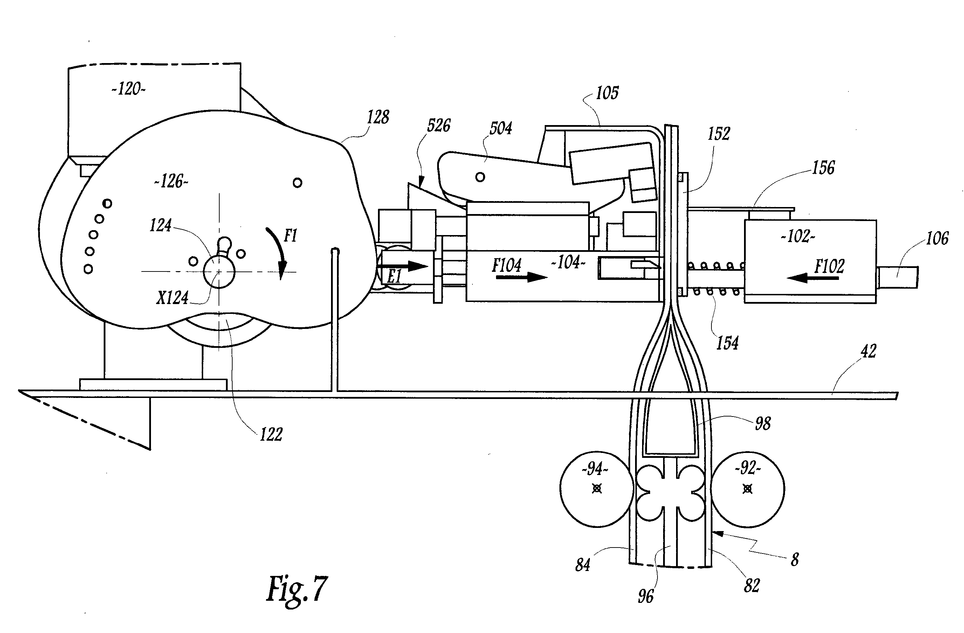

Pour la clarté du dessin, le ressort 154 est représenté uniquement sur les figures 7 à 9.

La traverse 102 porte également une lame 156 qui est plane, parallèle à la plaque 42 et dont la plus grande dimension est parallèle à l'axe X46. Cette lame est rigidement liée à la traverse 102. Une fente 158 de passage de la lame 156 est ménagée dans le plateau presseur 152. En fonction de la position relative des éléments 102 et 152, la lame 156 peut être plus ou moins engagée dans la fente 158.

La traverse 104 est recouverte, sur le dessus et du côté de la traverse 102, d'une plaque d'habillage 105 cintrée à angle droit selon une ligne de pliage parallèle à l'axe X46.

Les éléments 102 à 154 appartiennent au dispositif de serrage 100.

La machine 2 comprend également un dispositif 200 de découpe de la gaine 8.

Ce dispositif comprend une lame de coupe 202 intégrée à la traverse 104 et qui est montée sur un chariot 204 mobile, par rapport à cette traverse et parallèlement à l'axe Y100, entre une première position représentée aux figures 1 à 7 où cette lame 202 ne fait pas saillie au-delà de la traverse 104 en direction de la traverse 102 et une deuxième position où cette lame dépasse de la traverse 104 en direction de la traverse 102.

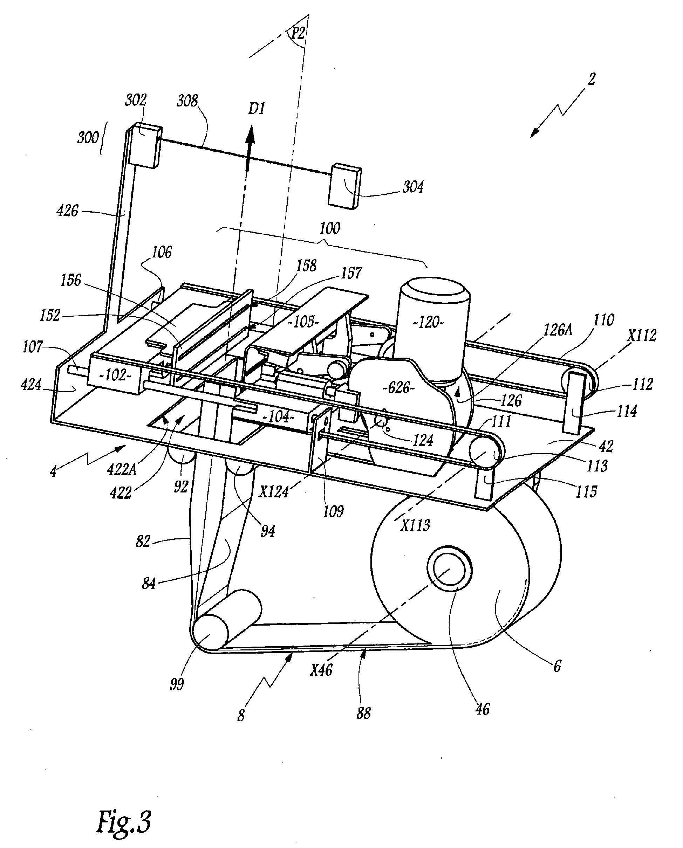

La position de la lame 202 par rapport à la traverse 104 est commandée grâce à un galet 242 qui est supporté par un bras 244 solidaire en translation du chariot 204, le galet 242 étant destiné à coopérer avec une came 226 montée sur la face 126A de la came 126 qui est visible à la figure 3. La came 226 est visible, par arrachement et en pointillés, à la figure 8. En d'autres termes, la came 226 permet de piloter le déplacement de la lame 202 par rapport à la traverse 104.

La plaque d'habillage 105 est percée d'une fente 1052 de passage de la lame de coupe 202 lorsqu'elle dépasse en direction de la traverse 102.

Un dispositif de détection 300 est disposé en partie haute de la machine 2 et comprend un émetteur 302 et une cellule 304 de détection d'un faisceau de rayon infrarouge 308 émis par l'émetteur 302. L'émetteur 302 est supporté par une patte 426 qui s'étend vers le haut à partir du bord rabattu 424. La cellule 304 est supportée par des moyens non représentés qui l'immobilisent par rapport au bâti 4. Lorsqu'on souhaite utiliser la machine 2, un dispositif de soufflage 400, qui est représenté uniquement à la figure 4 et qui peut se présenter sous la forme d'un ventilateur, est activé pour émettre un flux d'air FA en direction de la gaine 8, ce qui a pour effet de maintenir les première et deuxième feuilles 82 et 84 à distance l'une de l'autre au-dessus de l'écarteur 96, alors que les rouleaux 92 et 94 sont entraînés pour faire progresser la gaine 8 au moins jusqu'au-dessus du faisceau 308.

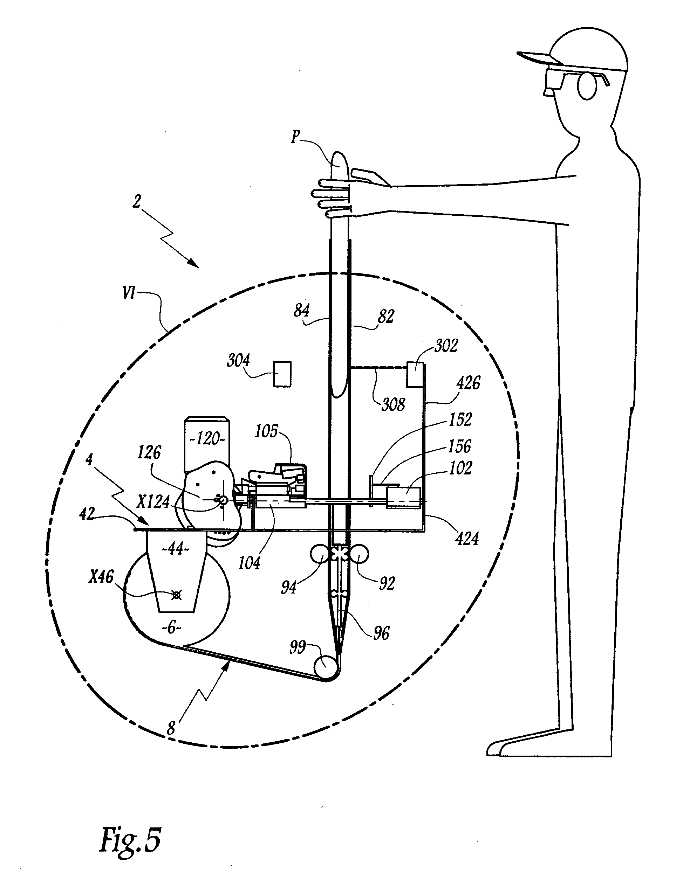

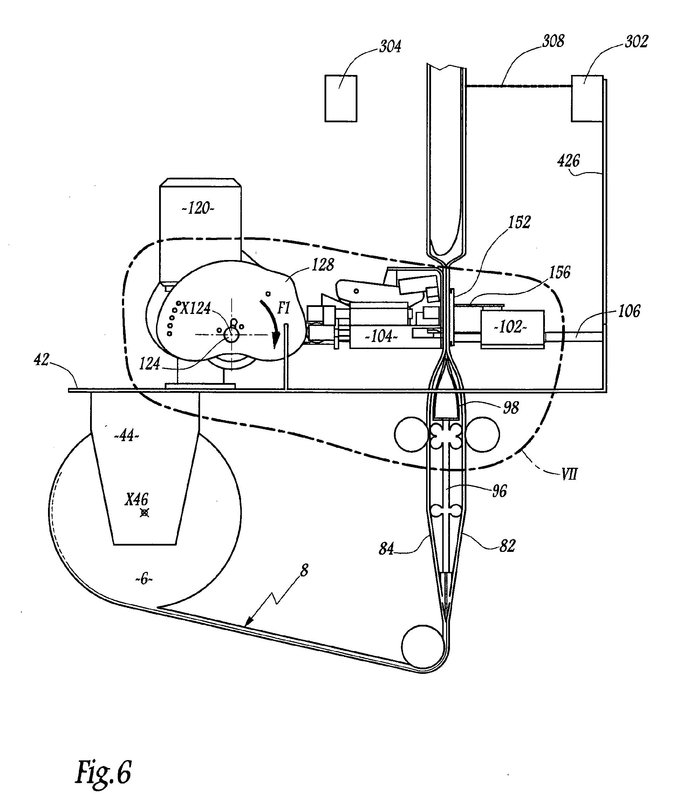

Il est alors possible à l'utilisateur d'engager un pain P dans l'extrémité supérieure de la gaine 8, entre les feuilles 82 et 84, comme représenté à la figure 5, ce qui est détecté par le dispositif de détection dans la mesure où le pain interrompt le faisceau 308, ce qui n'était pas le cas pour la gaine 8 dans la configuration de la figure 4. Une unité non représentée de commande de la machine 2 actionne alors le moteur 120 qui entraîne la came 126 dans le sens de la flèche F1 pour parvenir dans la configuration de la figure 6 où la came 126 exerce sur le galet 142 un effort E1 dirigé vers le plan P2. Ceci a pour effet de repousser la traverse 104 dans le sens de la flèche F104 jusque dans la configuration des figures 6 et 7 où la traverse 104 et le plateau presseur 152 sont en appui l'un contre l'autre de part et d'autre de la gaine 8. Ce déplacement des traverses 102 et 104 en direction du plan P2, dans le sens des flèches F102 et F104, a lieu grâce à la coopération de la came 126 avec le galet 142 et du fait de la synchronisation des mouvements obtenus avec les courroies 110 et 111.

La poursuite de la rotation de la came 126 autour de l'axe X124 et dans le sens de la flèche F1 a pour effet d'amener en contact la came 226 avec le galet 242. La came 226 exerce sur le galet 242 un effort E2 qui induit un déplacement de la lame 202 en direction du plateau presseur 152, comme représenté par la flèche F202 à la figure 8. La lame 202, qui est biseautée, coupe alors successivement les feuilles 84 et 82. L'appui de la lame 202 sur le plateau presseur 152 a peu tendance à émousser la lame de coupe 202 dans la mesure où une fente 157 est prévue sur le plateau 152 pour recevoir le bord tranchant de la lame 202. Pour la clarté du dessin, cette fente est représentée uniquement à la figure 3.

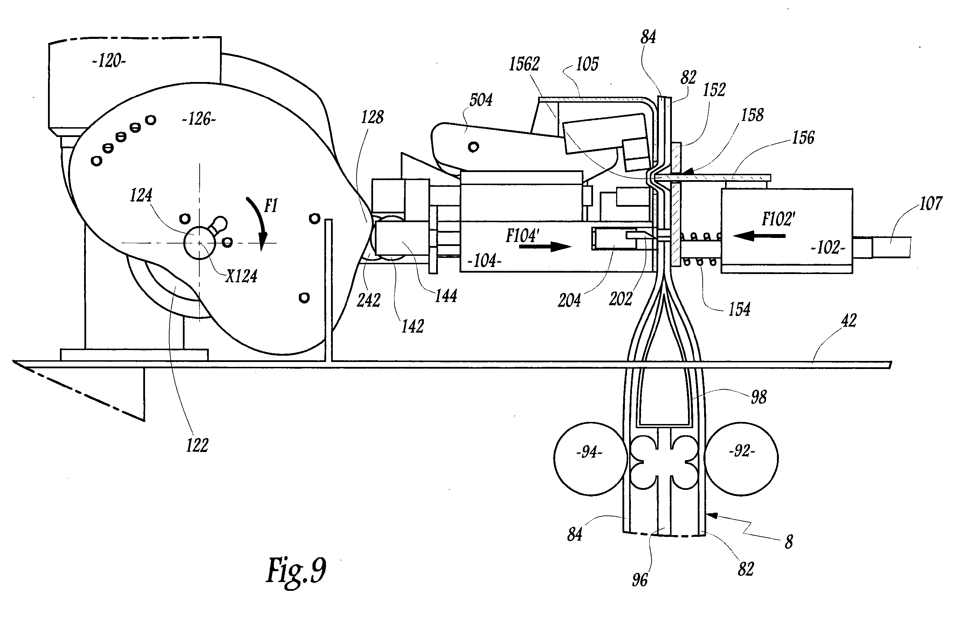

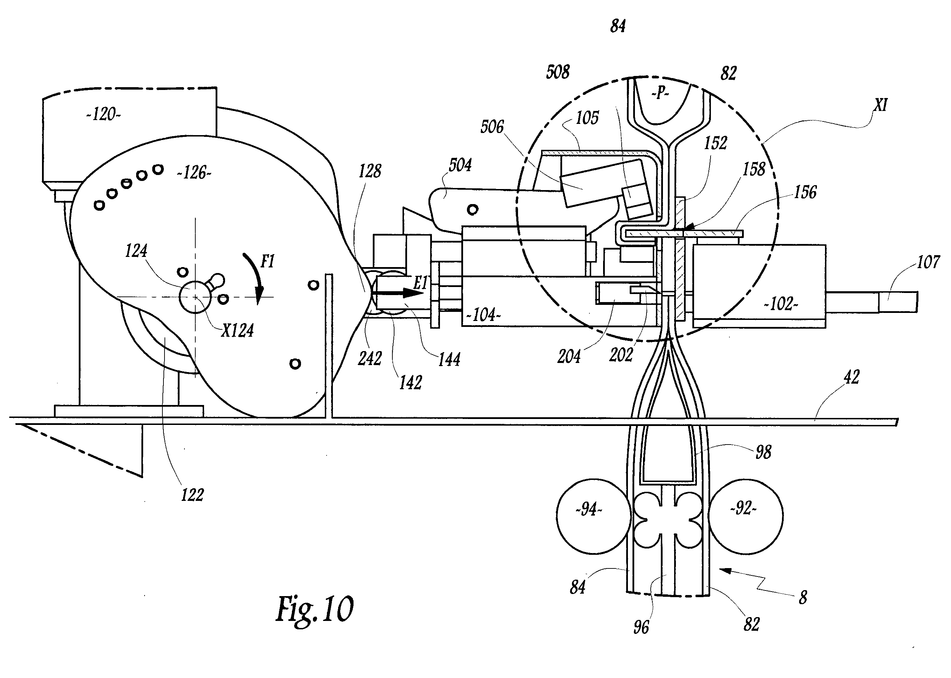

La poursuite du mouvement de rotation de la came 126 autour de l'axe X124 et dans le sens de la flèche F1 a pour effet d'amener une bosse 128 de la surface extérieure de la came 126 au contact du galet 142, comme représenté à la figure 9. Ceci augmente l'intensité de l'effort E1 et induit un déplacement supplémentaire de la traverse 104 en direction du bord 424, comme représenté par la flèche F104' à la figure 9, la traverse 102 se déplaçant alors en direction de la traverse 104, comme représenté par la flèche F102'. Ce mouvement supplémentaire des traverses 102 et 104 est possible du fait d'un rapprochement du plateau presseur 152 et de la traverse 102, à l'encontre de l'action du ressort 154. On passe alors successivement par la configuration de la figure 9 et par la configuration de la figure 10. Comme la lame 156 est fixe par rapport à la traverse 102, elle progresse à l'intérieur de la fente 158 et en direction de la traverse 104, en s'engageant dans une deuxième fente 1056 de la plaque d'habillage 105 qui est située au-dessus de la fente 1052.

La lame 156 pousse alors la gaine 8 à travers la fente 1056, par le côté de la feuille 82 et en direction du côté de la feuille 84, ce qui a pour effet de plier sur elle-même la gaine 8 en rabattant la feuille 82 autour de la lame 156 et la feuille 84 autour de la feuille 82.

Plus précisément, comme il ressort de la figure 10, une première bande 821 de la feuille 82 est définie en-dessous de la portion avant 1562 de la lame 156 qui pénètre à travers la fente 1056. Une deuxième bande 822 est formée dans la feuille 82, au-dessus de la partie 1562. Les bandes 821 et 822 sont jointives par un pli 825, le long du bord avant de la lame 156. La pénétration de la portion avant 1562 de la lame 156 à travers la fente 1056 a également pour effet de former une troisième bande 843 dans la feuille 84, au-dessous de la bande 821 et une quatrième bande 844 au-dessus de la bande 822. Les bandes 843 et 844 sont jointives par un pli 846, au niveau du bord avant de la lame 156.

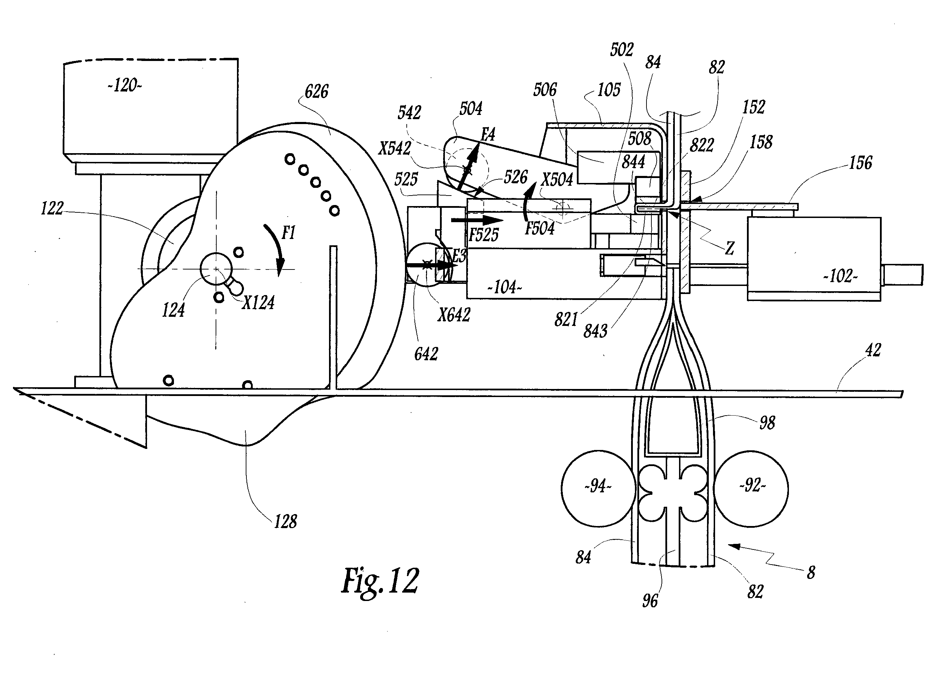

La poursuite du mouvement de la came 126 dans le sens de la flèche F1 autour de l'axe X46 a pour effet d'écarter la bosse 128 du galet 142, ce qui relâche partiellement l'effort de rapprochement des traverses 102 et 104, c'est-à-dire d'effort de serrage du plateau 152 contre la plaque 105. Les traverses 102 et 104 s'écartent alors progressivement l'une de l'autre, sous l'effet du ressort 154 et de moyens élastiques non représentés. Ceci a pour effet de faire ressortir la lame 156 de la fente 1056, alors que le plateau presseur 152 demeure en appui contre la plaque 105 et la gaine 8, au-dessus de la partie de cette gaine qui est engagée dans la fente 156, comme représenté à la figure 12. En d'autres termes, le plateau presseur 152 maintient la partie coupée de la gaine, au-dessus de la lame 156, en appuyant contre la plaque d'habillage 105. Cette partie coupée de la gaine constitue alors un sac 80 de réception du pain P.

La rétractation de la lame 156 hors de la fente 1056 a pour effet que les première et deuxième bandes 821 et 822 sont alors immédiatement en regard l'une de l'autre et en appui l'une contre l'autre comme visible à la figure 12.

On remarque que, le long du trajet de cheminement de la gaine 8 selon la direction d'avance D1, les moyens de pliage, dont la lame 156, sont situés après les moyens de découpe, dont la lame 202. Ceci correspond au fait que la gaine 8 est découpée avant d'être pliée.

Un dispositif de soudage 500 est prévu dans la traverse 104. Ce dispositif 500 comprend une lame de soudage 502 disposée en arrière de la fente 1056 par rapport à la plaque d'habillage 105, de telle sorte que la quatrième bande 844 repose sur la lame de soudage 502 lorsque la gaine 8 est partiellement poussée par la lame 156 à travers la fente 1056, comme représenté aux figures 10 à 12.

Le dispositif de soudage 500 comprend également un levier 504 pivotant autour d'un axe X504 parallèle à l'axe X46 et qui est équipé d'une contre-lame 506 qui porte une couche 508 de matériau relativement souple, par exemple en élastomère.

A l'opposé de la contre-lame 506, le levier 504 est équipé d'un galet 542 monté rotatif autour d'un axe X542 parallèle à l'axe X504. Un tiroir 525 est monté mobile par rapport à la traverse 104, selon une direction parallèle à l'axe Y100. Ce tiroir 525 est pourvu d'une came 526, sous la forme d'une surface inclinée ménagée en partie supérieure du tiroir 525.

Par ailleurs, une deuxième came 626 est montée fixe en rotation autour de l'arbre 124. La poursuite de la rotation de l'arbre 124 dans le sens de la flèche F1 a pour effet d'amener la deuxième came 626 dans une position angulaire où elle pousse, avec un effort E3, un galet 642 monté pivotant sur le tiroir 525 autour d'un axe X642 parallèle à l'axe X46. Ceci induit un déplacement du tiroir 525 dans le sens de la flèche F525 à la figure 12 et ce déplacement a pour effet d'exercer, par la coopération des éléments 526 et 542, un effort E4 de pivotement du levier 504 dans le sens de la flèche F504 à la figure 12. Ce mouvement plaque fermement la contre-lame 506 contre la zone multicouche Z formée des bandes 821, 822, 843 et 844, ces bandes étant alors pressées contre la lame de soudage 502 qui est chauffée à une température suffisante pour fondre au moins superficiellement les bandes 821 et 822, ce qui a pour effet de souder ensemble ces deux bandes 821 et 822 et de les souder avec les bandes 843 et 844. Après soudage, les plis 825 et 846 sont des plis à 180° puisque les bandes 821, 822, 843 et 844 sont en contact surfacique les unes contre les autres.

En variante, et selon une version simplifiée de l'invention, la lame de soudage est portée à une température induisant le soudage des bandes 821 et 822 ensemble et avec la bande 843, sans soudage avec la bande 844.

La poursuite de la rotation de l'arbre 124 dans le sens de la flèche F1 a pour effet de relâcher progressivement les efforts E1 et E3 exercés sur les galets 142 et 642, ce qui ouvre le dispositif de soudage 500, en faisant basculer le levier 504 dans le sens inverse de la flèche F504 et permet de laisser les traverses 102 et 104 s'écarter l'une de l'autre.

Le sac 80 est alors libéré et peut être récupéré par l'utilisateur, alors que le pain P termine sa progression en direction du fond de ce sac constitué par la zone multicouche Z comprenant les bandes 821, 822, 843 et 844.

En pratique, le mouvement de rotation de l'arbre 124 est suffisamment rapide pour que les étapes mentionnées ci-dessus, qui conduisent à la formation du sac 80 avec un fond multicouche ait lieu dans un intervalle de temps bref correspondant à la progression du pain P en direction du fond du sac 80. En d'autres termes, le fait pour l'utilisateur de disposer le pain P au niveau du dispositif 300 déclenche les opérations d'immobilisation, de découpe, de pliage et de soudage de la partie de la gaine destinée à constituer le sac 80 dans le lapse de temps correspondant à la descente du pain vers le fond du sac 80.

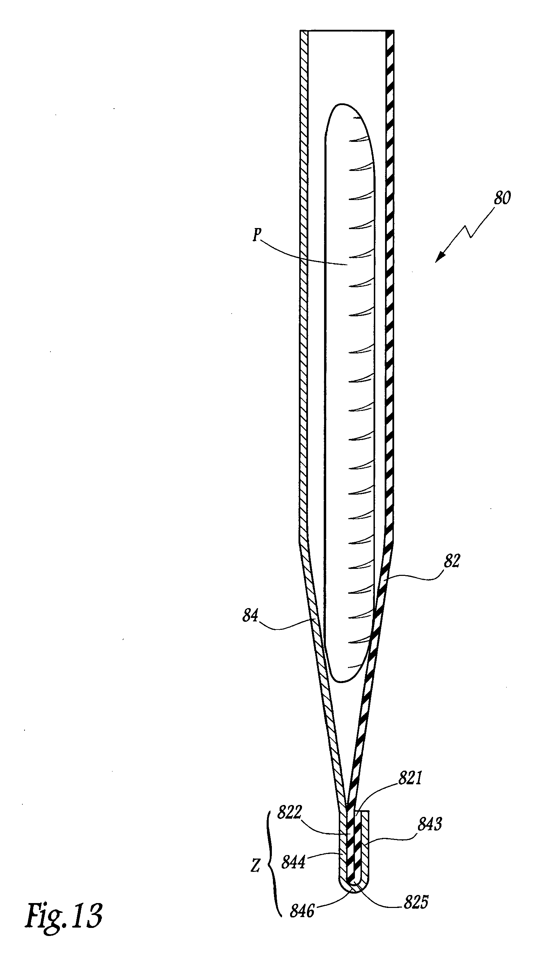

Comme représenté à la figure 13, le sac 80 fabriqué par la machine 2 présente un fond formé par la zone multicouche Z, plus solide que les simples bandes soudées des sacs obtenus de façon semi-automatique dans les machines d'ensachage de l'état de la technique.

L'invention a été représentée dans le cadre de l'utilisation d'un pain de type baguette. Elle est en fait applicable avec tout type de pain et, de façon générale, avec tout produit alimentaire allongé, tel que du saucisson ou un article de viennoiserie.

## Revendications

1. Machine (2) d'ensachage de produits alimentaires allongés (P), notamment de pains (P), cette machine comprenant :
- un bâti (4),
- une bobine (6) montée rotative sur ce bâti et comprenant une gaine tubulaire enroulée (8), cette gaine comprenant une première feuille (82) en matériau thermosoudable et une deuxième feuille (84) en papier,
- un mécanisme (92, 94) d'entraînement de la gaine, à partir de la bobine,
- des moyens (200) de découpe de la gaine,
- des moyens (500) de soudage de la gaine,
**caractérisée en ce que** cette machine comprend également des moyens (105, 152, 156) de pliage de la gaine (8), après sa découpe par les moyens de découpe (200) et avant son soudage par les moyens de soudage (500), dans une configuration où la première feuille (82) forme une première et une deuxième bandes (821, 822), jointives et rabattues l'une contre l'autre, alors que la deuxième feuille (84) forme une troisième et une quatrième bandes (843, 844), jointives et respectivement plaquées contre la première bande et contre la deuxième bande, **en ce que** les moyens de soudage (500) sont prévus et aptes à souder les première et deuxième bandes (821, 822) ensemble et au moins avec la troisième bande (843, 844) et **en ce que** les moyens de pliage comprennent un organe de pliage (156) mobile, selon une direction (Y100) perpendiculaire à une direction (D1) d'avance de la gaine, entre une première position où l'organe de pliage est à distance de la gaine (8) et une deuxième position où l'organe de pliage pousse la gaine, à partir du côté de la première feuille (82) et en direction du côté de la deuxième feuille (84), en pliant les première et deuxième feuilles au niveau de zones (825, 846) de jonction respectives entre les première et deuxième bandes (821, 822), d'une part, et entre les troisième et quatrième bandes (843, 844), d'autre part.

2. Machine selon la revendication 1, **caractérisée en ce qu'**elle comprend des moyens (100) de serrage de la gaine (8) avant découpe.

3. Machine selon la revendication 2, **caractérisée en ce que** les moyens de serrage (100) comprennent un organe (152) d'appui élastique contre la première feuille (82) de la gaine (8), cet organe étant monté sur une traverse (102) mobile par rapport à la gaine, avec interposition d'un ressort (154) de rappel de l'organe d'appui (152) en direction de la gaine, et **en ce que** la traverse (102) porte une lame (156) formant un organe de pliage de la gaine.

4. Machine selon la revendication 3, **caractérisée en ce qu'**une fente (158) de passage de la lame (156) est ménagée dans l'organe d'appui et **en ce que** la lame peut être plus ou moins engagée dans la fente (158) en fonction de la position relative de la traverse (102) et de l'organe d'appui (152).

5. Machine selon l'une des revendications 2 à 4, **caractérisée en ce que** les moyens de découpe (200) comprennent une lame de coupe (202) montée sur une traverse (104) appartenant aux moyens de serrage (100), cette lame étant coulissante par rapport à cette traverse, selon une direction (Y100) perpendiculaire à une direction d'avance (D1) de la gaine, entre une première position où la lame est rétractée à l'intérieur de la traverse et une deuxième position où la lame dépasse de la traverse, en direction d'une partie (102, 152) des moyens de serrage opposés à la traverse.

6. Machine selon les revendications 3 et 5, **caractérisée en ce que** l'organe d'appui est pourvu d'une fente (157) de réception d'un bord tranchant de la lame de coupe (202).

7. Machine selon l'une des revendications précédentes, **caractérisée en ce que** les moyens de soudage (500) comprennent une lame de chauffe (502) et une contre-lame (506) montée sur un levier (504) basculant autour d'un axe (X504) perpendiculaire à une direction d'avance (D1) de la gaine (8), entre une première position où la contre-lame est à distance de la gaine et une deuxième position où la contre-lame plaque les première (821), deuxième (822), troisième (843) et quatrième (844) bandes contre la lame de chauffe.

8. Machine selon l'une des revendications précédentes, **caractérisée en ce que** les moyens de découpe (200), les moyens de soudage (500), les moyens de pliage (105, 152, 156) et, éventuellement, les moyens de serrage (100) sont commandés par des cames (126, 226, 526, 626) entraînées par un arbre commun.

9. Machine selon la revendication 8, **caractérisée en ce que** les cames (126, 226, 526, 626) sont entraînées par un moteur (120) commandé en fonction d'un signal délivré par un dispositif (300) de détection de l'engagement d'un pain (P) dans une extrémité supérieure de la gaine.

10. Machine selon les revendications 2, 5, 7 et 8, **caractérisée en ce qu'**elle comprend :
- un premier galet (142), monté sur une traverse (104) appartenant aux moyens de serrage (100) et coopérant avec une première came (126),
- un deuxième galet (242), solidaire en translation avec la lame de coupe (202) et coopérant avec une deuxième came (226), et
- un troisième galet (542), monté sur le levier basculant (504) et coopérant avec une troisième came (526).

11. Sac (80) d'ensachage d'un produit alimentaire allongé (P), ce sac étant formé dans une machine d'ensachage (2) et à partir d'une gaine tubulaire (8) comprenant une première feuille (82) en matériau thermosoudable et une deuxième feuille (84) en papier assemblées ensemble, **caractérisé en ce que** le fond de ce sac comprend une zone multicouche (Z) formée par :
- une première et une deuxième bandes (821, 822) de la première feuille, jointives et qui sont rabattues et soudées l'une contre l'autre
- une troisième et une quatrième bande (843, 844) de la deuxième feuille, jointives et qui sont respectivement plaquées et soudées contre la première et la deuxième bandes.

12. Sac selon la revendication 11, **caractérisé en ce que** les première et deuxième bandes (821, 822) sont reliées entre elles par un premier pli (825) à 180° et les troisième et quatrième bandes sont reliées entre elles par un deuxième pli (846) à 180°.

13. Sac selon la revendication 12, **caractérisé en ce que** la zone multicouche comprend exclusivement les première, deuxième, troisième et quatrième bandes (821, 822, 843, 844) plaquées les unes contre les autres, avec le premier pli (825) disposé à l'intérieur du deuxième pli (846), ces deux plis formant ensemble l'extrémité inférieure du sac lorsque l'ouverture de ce sac est dirigée vers le haut.

14. Procédé de d'ensachage d'un produit alimentaire allongé (P) avec une machine (2) comprenant :
- un bâti 4),
- une bobine (6) montée rotative sur ce bâti et comprenant une gaine tubulaire enroulée (8), cette gaine comprenant une première feuille (82) en matériau thermosoudable et une deuxième feuille en papier,
- un mécanisme (92, 94) d'entraînement de la gaine à partir de la bobine,
- des moyens de découpe de la gaine
- des moyens de soudage de la gaine,
ce procédé comprenant des étapes successives consistant à :
a) dévider la gaine (8) de la bobine (6)
b) engager le produit alimentaire (P) dans l'extrémité de la gaine (8)
c) immobiliser (F102, F104) une partie dévidée de la gaine par rapport au bâti, à l'aide de moyens de serrage (100)
d) couper la gaine à l'aide des moyens de découpe (200)
e) souder ensemble deux parties coupées de la gaine
h) libérer un sac formé des étapes d) et e) et contenant le produit alimentaire
allongé en relâchant les moyens de serrage
**caractérisé en ce que** ce procédé comprend des étapes postérieure à l'étape d) et antérieure à l'étape h) et consistant successivement à :
f) plier la gaine à l'aide de moyens de pliage (105, 152, 156) comprenant un organe de pliage mobile (156), en rabattant l'une contre l'autre les première et deuxième bandes (821, 822) de la première feuille (82) de la gaine et en plaquant les troisième et quatrième bandes (843, 844) de la deuxième feuille (84) respectivement contre les première et deuxième bandes
g) souder les première et deuxième bandes ensemble et au moins avec la troisième bande

15. Procédé selon la revendication 14, **caractérisé en ce que** lors de l'étape g), on soude ensemble la première bande (821) avec la troisième bande (843) et la deuxième bande (822) avec la quatrième bande (844).

## Patentansprüche

1. Maschine (2) zum Eintüten von langgestreckten Lebensmittelprodukten (P), insbesondere von Broten (P), wobei diese Maschine umfasst:
- ein Gestell (4),
- eine Spule (6), die drehbar an diesem Gestell montiert ist und eine aufgerollte schlauchartige Hülle (8) umfasst, wobei diese Hülle ein erstes Blatt (82) aus wärmeschweißbarem Material und ein zweites Blatt (84) aus Papier umfasst,
- einen Mechanismus (92, 94) zum Antrieb der Hülle von der Spule aus,
- Mittel (200) zum Zuschneiden der Hülle,
- Mittel (500) zum Verschweißen der Hülle,
**dadurch gekennzeichnet, dass** diese Maschine auch Mittel (105, 152, 156) zum Falten der Hülle (8) nach ihrem Zuschnitt durch die Mittel zum Zuschneiden (200) und vor dem Verschweißen durch die Mittel (500) zum Verschweißen in einer Konfiguration, in der das erste Blatt (82) ein erstes und ein zweites Band (821, 822) bildet, die fugenlos verbunden sind und gegeneinander umgeschlagen sind, während das zweite Blatt (84) ein drittes und ein viertes Band (843, 844) bildet, die fugenlos miteinander verbunden sind und jeweils gegen das erste und gegen das zweite Band gedrückt sind, umfasst, dass die Mittel zum Verschweißen (500) vorgesehen und geeignet sind, das erste und das zweite Band (821, 822) zusammen und mindestens mit dem dritten Band (843, 844) zu verschweißen und dass die Mittel zum Falten ein Faltorgan (156) aufweisen, das gemäß einer Richtung (Y100) senkrecht zu einer Vorschubrichtung (D1) der Hülle zwischen einer ersten Position, in der das Faltorgan mit Abstand zu der Hülle (8) liegt und einer zweiten Position, in der das Faltorgan die Hülle von der Seite des ersten Blatts (82) und in die Richtung der Seite des zweiten Blattes (84) schiebt, beweglich ist, indem das erste und das zweite Blatt an Zonen (825, 846) der jeweiligen Verbindung zwischen dem ersten und dem zweiten Band (821, 822) einerseits und zwischen dem dritten und dem vierten Band (843, 844) andererseits gefaltet werden.

2. Maschine nach Anspruch 1, **dadurch gekennzeichnet, dass** sie Mittel (100) zum Klemmen der Hülle (8) vor dem Zuschnitt umfasst.

3. Maschine nach Anspruch 2, **dadurch gekennzeichnet, dass** die Mittel zum Klemmen (100) ein Organ (152) zum elastischen Stützen gegen das erste Blatt (82) der Hülle (8) umfassen, wobei dieses Organ an einen Querträger (102) montiert ist, der in Bezug auf die Hülle beweglich ist, unter Zwischenschaltung einer Feder (154) zum Rückstellen des Stützorgans (152) in Richtung der Hülle und dass der Querträger (102) eine Klinge (156) trägt, die ein Faltorgan der Hülle bildet.

4. Maschine nach Anspruch 3, **dadurch gekennzeichnet, dass** ein Spalt (158) für den Durchgang der Klinge (156) in dem Stützorgan eingearbeitet ist und dass die Klinge mehr oder weniger in den Spalt (158) abhängig von der relativen Position des Querträgers (102) und des Stützorgans (152) eingreift.

5. Maschine nach einem der Ansprüche 2 bis 4, **dadurch gekennzeichnet, dass** die Mittel zum Zuschneiden (200) eine Schneidklinge (202) umfassen, die an einem Querträger (104) montiert ist, der zu den Mitteln zum Klemmen (100) gehört, wobei diese Klinge in Bezug auf diesen Querträger gemäß einer Richtung (Y100) senkrecht zu einer Vorschubrichtung (D1) der Hülle zwischen einer ersten Position, in der die Klinge in das Innere des Querträgers zurückgezogen ist und einer zweiten Position, in der die Klinge den Querträger überragt, in Richtung eines Teils (102, 152) der Mittel zum Klemmen, die entgegengesetzt zum Querträger liegen, gleitend ist.

6. Maschine nach den Ansprüchen 3 und 5, **dadurch gekennzeichnet, dass** das Stützorgan mit einem Spalt (157) zur Aufnahme eines Schneidrandes der Schneidklinge (202) versehen ist.

7. Maschine nach einem der vorhergehenden Ansprüche, **dadurch gekennzeichnet, dass** die Mittel zum Verschweißen (500) eine Heizklinge (502) und eine Gegenklinge (506) umfassen, die an einem Hebel (504) montiert ist, der um eine Achse (X504) senkrecht zu einer Vorschubrichtung (D1) der Hülle (8) zwischen einer ersten Position, in der die Gegenklinge zu der Hülle beabstandet ist, und einer zweiten Position, in der die Gegenklinge das erste (821), zweite (822), dritte (843) und vierte (844) Band gegen die Heizklinge drückt.

8. Maschine nach einem der vorhergehenden Ansprüche, **dadurch gekennzeichnet, dass** die Mittel (200) zum Zuschneiden, die Mittel (500) zum Verschweißen, die Mittel (105, 152, 156) zum Falten und gegebenenfalls die Mittel (100) zum Klemmen durch Nocken (126, 226, 526, 626) gesteuert sind, die durch eine gemeinsame Welle angetrieben werden.

9. Maschine nach Anspruch 8, **dadurch gekennzeichnet, dass** die Nocken (126, 226, 526, 626) durch einen Motor (120) angetrieben werden, die in Abhängigkeit von einem Signal gesteuert wird, das von einer Vorrichtung (300) zur Detektion des Eingriffs eines Brotes (P) in ein oberes Ende der Hülle geliefert wird.

10. Maschine nach den Ansprüchen 2, 5, 7 und 8, **dadurch gekennzeichnet, dass** sie umfasst:
- eine erste Rolle (142), die an einem zu den Mitteln (100) zum Klemmen gehörenden Querträger (104) montiert ist und mit einem ersten Nocken (126) zusammenarbeitet,
- eine zweite Rolle (242), die translatorisch mit der Schneidklinge (202) verbunden ist und mit einem zweiten Nocken (226) zusammenarbeitet, und
- einer dritten Rolle (542), die an dem Schwenkhebel (504) montiert ist und mit einem dritten Nocken (526) zusammenarbeitet.

11. Beutel (80) zum Eintüten eines langgestreckten Lebensmittelprodukts (P), wobei dieser Beutel in einer Maschine (2) zum Eintüten und aus einer schlauchartigen Hülle (8) gebildet wird, die ein erstes Blatt (82) aus einem thermoschweißbaren Material und einem zweiten Blatt (84) aus Papier, die zusammengesetzt sind, umfasst, **dadurch gekennzeichnet, dass** der Boden des Beutels eine mehrschichtige Zone (Z) umfasst, die gebildet wird durch:
- ein erstes und ein zweites Band (821, 822) des ersten Blattes, die fugenlos verbunden und zueinander umgeschlagen und verschweißt sind,
- ein drittes und ein viertes Band (843, 844) des zweiten Blattes, die fugenlos miteinander verbunden sind und die jeweils gegen das erste und das zweite Band gedrückt und mit diesen verschweißt sind.

12. Beutel nach Anspruch 11, **dadurch gekennzeichnet, dass** das erste und das zweite Band (821, 822) untereinander durch einen ersten Falz (825) mit 180° und das dritte und das vierte Band untereinander durch einen zweiten Falz (846) mit 180° verbunden sind.

13. Beutel nach Anspruch 12, **dadurch gekennzeichnet, dass** die mehrschichtige Zone ausschließlich das erste, zweite, dritte und vierte Band (821, 822, 843, 844) umfasst, die gegeneinander gedrückt sind, mit einem ersten Falz (825), der im Inneren des zweiten Falzes (846) angeordnet ist, wobei diese zwei Falze zusammen das untere Ende des Beutels bilden, wenn die Öffnung dieses Beutels nach oben gerichtet ist.

14. Verfahren zum Eintüten eines langgestreckten Lebensmittelprodukts (P) mit einer Maschine (2), die umfasst:
- ein Gestell (4),
- eine Spule (6), die drehbar an diesem Gestell montiert ist und eine aufgerollte schlauchartige Hülle (8) umfasst, wobei diese Hülle ein erstes Blatt (82) aus wärmeschweißbarem Material und ein zweites Blatt (84) aus Papier umfasst,
- einen Mechanismus (92, 94) zum Antrieb der Hülle von der Spule aus,
- Mittel (200) zum Zuschneiden der Hülle,
- Mittel (500) zum Verschweißen der Hülle,
wobei dieses Verfahren aufeinanderfolgende Schritte umfasst, die darin bestehen:
a) Abwickeln der Hülle (8) von der Spule (6)
b) Einführen des Lebensmittelprodukts (P) in das Ende der Hülle (8)
c) Festhalten (F102, F104) eines abgewickelten Teils der Hülle in Bezug auf das Gestell mit Hilfe der Mittel (100) zum Klemmen
d) Zuschneiden der Hülle mit Hilfe der Mittel (200) zum Zuschneiden
e) Zusammenschweißen der zwei geschnittenen Teile der Hülle
h) Freigeben eines aus den Schritten d) und e) gebildeten Beutels, der das langgestreckte Lebensmittelprodukt enthält, indem die Mittel zum Klemmen losgelassen werden
**dadurch gekennzeichnet, dass** das Verfahren zum Schritt d) nachfolgende und zum Schritt h) vorhergehende Schritte umfasst, die aufeinanderfolgend darin bestehen:
f) Falten der Hülle mit Hilfe der Mittel (105, 152, 156) zum Falten, die ein bewegliches Organ (156) zum Falten umfassen, indem das erste und das zweite Band (821, 822) des ersten Blattes (82) der Hülle umgeschlagen werden und indem das dritte das vierte Band (843, 844) des zweiten Blattes (84) jeweils gegen das erste und zweite Band gedrückt werden
g) Verschweißen des ersten und zweiten Bandes zusammen und mindestens mit dem dritten Band.

15. Verfahren nach Anspruch 14, **dadurch gekennzeichnet, dass** bei dem Schritt g) das erste Band (821) mit dem dritten Band (843) und das zweite Band (822) mit dem vierten Band (844) verschweißt werden.

## Claims

1. Machine (2) for bagging up elongated food products (P), particularly loaves (P), the said machine comprising:
- a frame (4);
- a reel (6) which is mounted in a rotating manner on the said frame and comprises a wound-on tubular sheath (8), the said sheath comprising a first sheet (82) made of heat-sealable material and a second sheet (84) made of paper;
- a mechanism (92, 94) for drawing the sheath along, starting from the reel;
- means (200) for cutting the sheath; and
- means (500) for sealing the sheath;
**characterised**
**in that** the said machine also comprises means (105, 152, 156) for folding the sheath (8), after it has been cut by the cutting means (200) and before it has been sealed by the sealing means (500), into a configuration in which the first sheet (82) forms a first and a second strip (821, 822), which strips are contiguous and are folded back against one another, while the second sheet (84) forms a third and a fourth strip (843, 844), which strips are contiguous and are flattened against the first strip and against the second strip respectively;
**in that** the sealing means (500) are intended for, and capable of, sealing the first and second strips (821, 822) together and at least to the third strip (843, 844);
and **in that** the folding means comprise a folding component (156) which is movable, in a direction (Y100) perpendicular to a direction (D1) of advance of the sheath, between a first position in which the folding component is at a distance from the sheath (8) and a second position in which the folding component pushes the sheath, starting from the side of the first sheet (82) and towards the side of the second sheet (84), while folding the first and second sheets at respective junction zones (825, 846) between the first and second strips (821, 822), on the one hand, and between the third and fourth strips (843, 844) on the other.

2. Machine according to Claim 1, **characterised in that** it comprises means (100) for gripping the sheath (8) prior to cutting.

3. Machine according to Claim 2, **characterised in that** the gripping means (100) comprise a component (152) for bearing elastically against the first sheet (82) of the sheath (8), the said component being mounted on a cross-piece (102) which is movable in relation to the sheath, with the interposition of a spring (154) for moving the bearing component (152) back towards the sheath, and **in that** the cross-piece (102) carries a blade (156) which forms a component for folding the sheath.

4. Machine according to Claim 3, **characterised in that** a slot (158) for the blade (156) to pass through is arranged in the bearing component, and **in that** said blade can be fitted into the slot (158) to a greater or lesser extent, depending upon relative position of the cross-piece (102) and the bearing component (152).

5. Machine according to one of Claims 2 to 4, **characterised in that** the cutting means (200) comprise a cutting blade (202) which is mounted on a cross-piece (104) belonging to the gripping means (100), the said blade being one that slides in relation to the said cross-piece, in a direction (Y100) perpendicular to a direction of advance (D1) of the sheath, between a first position in which the blade is retracted inside the cross-piece and a second position in which the blade juts out of the cross-piece towards a part (102, 152) of the gripping means which are opposite the cross-piece.

6. Machine according to Claims 3 and 5, **characterised in that** the bearing component is provided with a slot (157) for receiving a cutting edge of the cutting blade (202).

7. Machine according to one of the preceding claims, **characterised in that** the sealing means (500) comprise a heating blade (502) and a counter-blade (506) which is mounted on a lever (504) that rocks about an axis (X504) perpendicular to a direction of advance (D1) of the sheath (8), between a first position in which the counter-blade is at a distance from the sheath and a second position in which said counter-blade flattens the first (821), second (822), third (843) and fourth (844) strips against the heating blade.

8. Machine according to one of the preceding claims, **characterised in that** the cutting means (200), the sealing means (500), the folding means (105, 152, 156) and, if necessary, the gripping means (100) are controlled by cams (126, 226, 526, 626) driven by a common shaft.

9. Machine according to Claim 8, **characterised in that** the cams (126, 226, 526, 626) are driven by a motor (120) which is controlled in dependence upon a signal put out by a device (300) for detecting the fitting of a loaf (P) into an upper end of the sheath.

10. Machine according to Claims 2, 5, 7 and 8, **characterised in that** it comprises:
- a first roller (142) which is mounted on a cross-piece (104) belonging to the gripping means (100) and cooperates with a first cam (126);
- a second roller (242) which is integral in translation with the cutting blade (202) and cooperates with a second cam (226); and
- a third roller (542) which is mounted on the rocking lever (504) and cooperates with a third cam (526).

11. Bag (80) for bagging up an elongated food product (P), the said bag being formed in a bagging-up machine (2), starting from a tubular sheath (8) comprising a first sheet (82) made of heat-sealable material and a second sheet (84) made of paper, which sheets are joined together, **characterised in that** the bottom of the said bag comprises a multilayer zone (Z) which is formed by:
- a first and a second strip (821, 822) belonging to the first sheet, which strips are contiguous and are folded back and sealed against one another;
- a third and a fourth strip (843, 844) belonging to the second sheet, which strips are contiguous and are flattened and sealed against the first and second strips respectively.

12. Bag according to Claim 11, **characterised in that** the first and second strips (821, 822) are connected to each other by a first 180° fold (825) and the third and fourth strips are connected to each other by a second 180° fold (846).

13. Bag according to Claim 12, **characterised in that** the multilayer zone comprises exclusively the first, second, third and fourth strips (821, 822, 843, 844) which are flattened against one another, with the first fold (825) disposed inside the second fold (846), the said two folds together forming the lower end of the bag when the opening of the said bag is directed upwards.

14. Method of bagging up an elongated food product (P) with a machine (2) comprising:
- a frame (4);
- a reel (6) which is mounted in a rotating manner on the said frame and comprises a wound-on tubular sheath (8), the said sheath comprising a first sheet (82) made of heat-sealable material and a second sheet made of paper;
- a mechanism (92, 94) for drawing the sheath along, starting from the reel;
- means for cutting the sheath; and
- means for sealing the sheath;
the said method comprising successive stages consisting in:
a) unwinding the sheath (8) from the reel (6);
b) fitting the food product (P) into the end of the sheath (8);
c) immobilising (F102, F104) an unwound portion of the sheath in relation to the frame, with the aid of gripping means (100);
d) cutting the sheath with the aid of cutting means (200);
e) sealing together two cut portions of the sheath;
h) releasing a bag which has been formed from stage d) and e) and which contains the elongated food product, by loosening the gripping means;
**characterised in that** the said method comprises stages subsequent to stage d) and prior to stage h), which stages consist successively in:
f) folding the sheath with the aid of folding means (105, 152, 156) comprising a movable folding means (156), by folding back the first and second strips (821, 822) belonging to the first sheet (82) of the sheath against one another, and by flattening the third and fourth strips (843, 844) of the second sheet (84) against the first and second strips respectively;
g) sealing the first and second strips together and at least to the third strip.

15. Method according to Claim 14, **characterised in that**, in the course of stage g), the first strip (821) is sealed together with the third strip (843) and the second strip (822) is sealed together with the fourth strip (844).
